# EUROPÄISCHE PATENTSCHRIFT

(11) **EP 3 394 965 B1**
(45) Veröffentlichungstag und Bekanntmachung des Hinweises auf die Patenterteilung: **26.02.2020**
(21) Anmeldenummer: 16785117.9
(22) Anmeldetag: 19.10.2016
(51) Int. Cl.: H02K 15/03, H02K 11/215, H02K 7/116, H02K 1/02, H02K 1/28

(54) **SENSOREINRICHTUNG IN EINER ELEKTRISCHEN MASCHINE**
SENSOR APPARATUS IN AN ELECTRIC MACHINE
DISPOSITIF DU CAPTEUR DANS UNE MACHINE ÉLECTRIQUE

(30) Priorität: 22.12.2015 DE 102015226429
(43) Veröffentlichungstag der Anmeldung: 31.10.2018
(73) Patentinhaber: Robert Bosch GmbH, 70442 Stuttgart (DE)
(72) Erfinder: STEWING, Felix, 71711 Steinheim (DE)
(86) Internationale Anmeldenummer: PCT/EP2016/075030
(87) Internationale Veröffentlichungsnummer: WO 2017/108229

(56) Entgegenhaltungen:
- EP-A1- 1 542 344
- WO-A1-2013/124538
- DE-A1-102013 216 245
- DE-A1-102013 221 688

## Beschreibung

Die Erfindung bezieht sich auf eine Sensoreinrichtung in einer elektrischen Maschine.

### Stand der Technik

Bekannt sind Lagesensorsysteme zur Erfassung der Winkellage der Rotorwelle einer elektrischen Maschine, bei denen auf der Rotorwelle ein Gebermagnet angeordnet ist, dessen rotierendes Magnetfeld von einem gehäuseseitigen Sensor erfasst und ausgewertet wird. Ein derartiges Lagesensorsystem wird beispielsweise in der DE 10 2010 029 332 A1 beschrieben.

Die Druckschrift DE102013216245 A1 wird als nächstliegender Stand der Technik angesehen und offenbart eine Leiterplatte mit einem Magnetfeldsensor für einen elektrischen Servomotor.

### Offenbarung der Erfindung

Mithilfe der erfindungsgemäßen Sensoreinrichtung kann die Rotorlage der Rotorwelle einer elektrischen Maschine detektiert werden. Bei der elektrischen Maschine handelt es sich beispielsweise um einen elektronisch kommutierten Motor mit Statorwicklungen und rotorseitigen Permanentmagneten oder um einen Gleichstrommotor mit rotorseitigen Ankerwicklungen, die über eine Kommutierungseinrichtung bestromt werden, und mit statorseitigen Permanentmagneten. Die elektrische Maschine kann als Motor beispielsweise in Fahrzeugen, insbesondere zum Antrieb von Hilfsaggregaten oder als Antriebsmaschine des Fahrzeugs eingesetzt werden oder als Generator.

Die erfindungsgemäße, auf einer Leiterplatte angebrachte Sensoreinrichtung wird durch die Merkmale des unabhängigen Anspruchs 1 offenbart. Vorteilhafte Ausführungen dieser Sensoreinrichtung werden durch die Merkmale der abhängigen Ansprüche 2 bis 7 beschrieben.

Die Sensoreinrichtung ist gehäusefest in der elektrischen Maschine angeordnet und umfasst einen integrierten Magnetfeldsensor, der sowohl in der Lage ist, das Erdmagnetfeld zu detektieren, als auch ein mit der Rotorwelle der elektrischen Maschine rotierendes Magnetfeld, das zur Rotorlageerkennung dient. Dem Magnetfeldsensor der Sensoreinrichtung kommen somit zwei Funktionen zu: Zum einen wird das Erdmagnetfeld sensiert, zum anderen das Magnetfeld der umlaufenden Rotorwelle. Das Erdmagnetfeld und das Rotorwellenmagnetfeld überlagern sich zu einem Signal in dem Magnetfeldsensor, wobei über eine Softwareauswertung des Signalverlaufs, gegebenenfalls mit angepasster Hardware, die Magnetfelder separiert werden können und sowohl qualitativ als auch quantitativ erfasst werden können. Dies erlaubt es somit, mit nur einem Magnetfeldsensor aus dem Erdmagnetfeld und aus dem Rotorwellenmagnetfeld Informationen zu bestimmen, wobei im Falle des Rotorwellenmagnetfeldes die aktuelle Rotorlage erkannt werden kann und im Falle des Erdmagnetfelds die Lage der elektrischen Maschine im Raum bestimmt werden kann.

Die Sensoreinrichtung ist gehäusefest in der elektrischen Maschine angeordnet und befindet sich entweder an einem Gehäuse der elektrischen Maschine oder am Stator. Die umlaufende Rotorwelle erzeugt ein entsprechend umlaufendes Magnetfeld, das von dem gehäusefesten Magnetfeldsensor detektiert wird.

Erfindungsgemäß sind weitere Sensoren zusätzlich zum Magnetfeldsensor in die Sensoreinrichtung integriert, die gemeinsam mit dem Magnetfeldsensor die Sensoreinrichtung bilden. Es handelt sich um eine 9-Achs-Sensoreinrichtung, über die die Beschleunigungen in X-, Y-und Z-Richtung sowie die Winkelbeschleunigungen erfasst werden können.

Zusätzlich zu den Sensoren umfasst die erfindungsgemäße Sensoreinrichtung auch eine Auswerteeinheit, über die die Sensorsignale ausgewertet werden. Im Fall des Magnetsensors ist es über die Auswerteeinheit möglich, die empfangenen Magnetfeldsignale im Hinblick auf das Erdmagnetfeld und das Rotorwellenmagnetfeld zu unterscheiden.

Gemäß bevorzugter Ausführung ist die Sensoreinrichtung als eine MEMS-Sensoreinrichtung (Micro Electro Mechanical System) ausgeführt, die insbesondere in der vorbeschriebenen Weise eine Mehrzahl unterschiedlicher Sensoren einschließlich eines Magnetfeldsensors sowie eine Auswerteeinheit umfasst.

Die Sensoreinrichtung mit dem Magnetfeldsensor ermöglicht es, auf einen herkömmlichen Rotorlagesensor, der als Einzelsensor ausgeführt ist, zu verzichten. Dementsprechend weist eine elektrische Maschine, die mit einer erfindungsgemäßen Sensoreinrichtung ausgestattet ist, nur diese Sensoreinrichtung, nicht jedoch nicht einen weiteren, als Rotorlagesensor eingesetzten Sensor auf.

Erfindungsgemäß ist die Sensoreinrichtung auf einer Leiterplatte angeordnet, über die die Verschaltung von Statorwicklungen erfolgt. Eine derartige Leiterplatte ist bei elektronisch kommutierten elektrischen Maschinen erforderlich und ist Träger der Sensoreinrichtung, so dass die Sensoreinrichtung keine separate Befestigung am Gehäuse oder am Stator der elektrischen Maschine benötigt.

Die Sensoreinrichtung ist vorzugsweise benachbart zur Stirnseite der elektrischen Maschine angeordnet. Die Leiterplatte zur Verschaltung der Statorwicklungen befindet sich ebenfalls benachbart zur Stirnseite der elektrischen Maschine.

Die Erfindung bezieht sich des Weiteren auf eine elektrische Maschine, die mit einer entsprechenden Sensoreinrichtung ausgestattet ist. Als Signalgeber für die Rotorlageerkennung kann ein Magnet fungieren, der an der Stirnseite der Rotorwelle angeordnet ist. Beim Umlaufen der Rotorwelle wird das umlaufende Magnetfeld dieses Magneten von dem Magnetfeldsensor in der Sensoreinrichtung detektiert. Der Magnet ist beispielsweise als eine Magnetpille ausgeführt, die an der Stirnseite der Rotorwelle angeordnet ist, beispielsweise in eine Vertiefung an der Stirnseite der Rotorwelle eingesetzt ist.

In einer alternativen Ausführung ist die Rotorwelle ohne Magnet als Signalgeber für die Rotorlageerkennung ausgeführt. Dementsprechend vereinfacht sich die konstruktive Ausführung der elektrischen Maschine. Das mit der Rotorwelle umlaufende Magnetfeld wird beispielsweise über eine magnetisierbare bzw. magnetisierte Rotorwelle erzeugt, so dass die Rotorwelle unmittelbar als Signalgeber verwendet wird. Es kann beispielsweise mittels einer Laserbehandlung ein Magnetfeldmodulationsmuster in die Rotorwelle eingebracht werden.

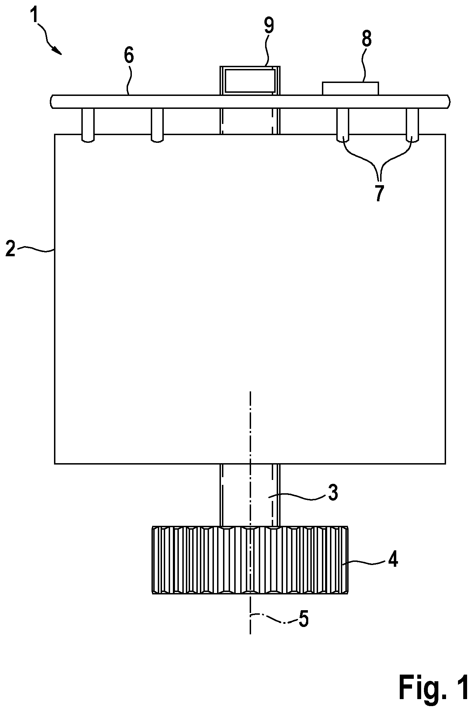

Weitere Vorteile und zweckmäßige Ausführungen sind den weiteren Ansprüchen, der Figurenbeschreibung und der Zeichnung zu entnehmen, in der in schematischer Weise eine elektrische Maschine mit einer Sensoreinrichtung auf einer Leiterplatte dargestellt ist.

Die in der Figur dargestellte elektrische Maschine 1 ist als Innenläufer ausgebildet und weist einen Stator 2 auf, der einen innen gelagerten Rotor mit einer Rotorwelle 3 aufnimmt, an dessen einer Stirnseite ein Getrieberad 4 angeordnet ist. Die Längs- und Drehachse der elektrischen Maschine ist mit 5 bezeichnet. Bei der elektrischen Maschine handelt es sich beispielsweise um einen elektronisch kommutierten Motor mit Statorwicklungen, die über eine Verschaltplatte angesteuert werden, welche eine Leiterplatte 6 mit Anbindungen 7 zu den Statorwicklungen umfasst. Die Leiterplatte 6 liegt stirnseitig an dem Stator 2 bzw. an einem Gehäuse der elektrischen Maschine, in welchem der Stator 2 aufgenommen ist. Die Leiterplatte 6 liegt auf der gegenüberliegenden Stirnseite des Getrieberades 4.

Die Leiterplatte 6 ist Träger einer Sensoreinrichtung 8, die einen Magnetfeldsensor zum Sensieren sowohl des Erdmagnetfeldes als auch eines mit der Rotorwelle 3 umlaufenden Magnetfeldes umfasst. Darüber hinaus weist die Sensoreinrichtung 8 weitere Sensoren zum Detektieren der Längsbeschleunigungen in allen drei Raumrichtungen sowie der Winkelbeschleunigungen um alle drei Raumrichtungen auf.

Die Sensoreinrichtung 8 mit dem Magnetfeldsensor liegt auf der Außenseite der Leiterplatte 6 und befindet sich benachbart zur Stirnseite des aus dem Stator 2 herausgeführten Abschnitts der Rotorwelle 3. An der Stirnseite der Rotorwelle 3, benachbart zur Sensoreinrichtung 8, befindet sich entweder ein Magnet, beispielsweise eine Magnetpille, die in eine stirnseitige Ausnehmung in der Rotorwelle 3 eingesetzt ist und deren beim Umlaufen der Rotorwelle sich änderndes Magnetfeld von dem Magnetfeldsensor der Sensoreinrichtung 8 detektiert werden kann. Es ist aber auch möglich, dass die Rotorwelle 3 aus einem magnetisierbaren Material besteht und an der Stirnseite ein Magnetfeldmodulationsmuster 9 in die Rotorwelle 3 eingebracht ist, beispielsweise durch eine Laser-Hitzebehandlung. Auch in diesem Fall entsteht ein Magnetfeld, das sich beim Umlaufen der Rotorwelle 3 ändert, wobei das sich ändernde Magnetfeld von dem Magnetfeldsensor der Sensoreinrichtung 8 erfasst wird.

In der Sensoreinrichtung 8 befindet sich auch eine Auswerteeinheit, über die die sensierten Signale, insbesondere die Signale des Magnetfeldsensors ausgewertet werden. Bei der Sensoreinrichtung 8 handelt es sich beispielsweise um eine MEMS-Sensoreinrichtung (Micro Electro Mechanical System).

Der Magnetfeldsensor der Sensoreinrichtung 8 sensiert sowohl das Erdmagnetfeld als auch das rotierende Magnetfeld der Rotorwelle 3, wobei in der Auswerteeinheit der Sensoreinrichtung die überlagerten Magnetfelder aus dem Sensorsignal analysiert werden, so dass die Magnetfelder einzeln zuordenbar sind. Daraufhin ist es möglich, die aktuelle Rotorlage der Rotorwelle 3 zu bestimmen.

## Patentansprüche

1. Sensoreinrichtung (8) auf einer Leiterplatte (6), über die die Verschaltung von Statorwicklungen einer elektrischen Maschine (1) erfolgt, wobei die Sensoreinrichtung (8) gehäusefest in der elektrischen Maschine (1) angeordnet ist, wobei die Leiterplatte (6) ein Träger der Sensoreinrichtung (8) ist, so dass die Sensoreinrichtung (8) keine separate Befestigung an einem Gehäuse oder einem Stator (2) der elektrischen Maschine (1) benötigt, mit einem in die Sensoreinrichtung (8) integrierten Magnetfeldsensor, über den sowohl das Erdmagnetfeld als auch ein mit der Rotorwelle (3) der elektrischen Maschine (1) rotierendes Magnetfeld zur Rotorlageerkennung detektierbar ist, **dadurch gekennzeichnet, dass** die Sensoreinrichtung (8) weitere Sensoren zum Detektieren der Längsbeschleunigungen in allen drei Raumrichtungen sowie der Winkelbeschleunigungen um alle drei Raumrichtungen aufweist, wobei in die Sensoreinrichtung (8) eine Auswerteeinheit integriert ist, über die die Sensorsignale ausgewertet werden, wobei in der Auswerteeinheit der Sensoreinrichtung (8) die überlagerten Magnetfelder aus dem Sensorsignal analysiert werden, so dass die Magnetfelder einzeln zuordenbar sind, um die aktuelle Rotorlage der Rotorwelle (3) zu bestimmen.

2. Sensoreinrichtung (8) nach einem der Ansprüche 1, **gekennzeichnet durch** eine Ausführung als MEMS-Sensoreinrichtung (Micro Electro Mechanical System).

3. Sensoreinrichtung (8) nach einem der Ansprüche 1 oder 2, **dadurch gekennzeichnet, dass** die Sensoreinrichtung (8) benachbart zur Stirnseite der elektrischen Maschine (1) angeordnet ist.

4. Elektrische Maschine (1) mit einem Stator (2) mit Statorwicklungen, mit einem Rotor mit einer Rotorwelle (3), mit einem Gehäuse, mit einer Leiterplatte (6) zur Verschaltung von Statorwicklungen und mit einer Sensoreinrichtung (8) nach einem der Ansprüche 1 bis 3.

5. Elektrische Maschine (1) nach Anspruch 4, **dadurch gekennzeichnet, dass** an der Stirnseite der Rotorwelle (3) als Signalgeber ein Magnet angeordnet ist.

6. Elektrische Maschine (1) nach Anspruch 4, **dadurch gekennzeichnet, dass** die Rotorwelle (3) ohne Magnet als Signalgeber zur Rotorlageerkennung ausgeführt ist.

7. Elektrische Maschine (1) nach einem der Ansprüche 4 bis 6, **dadurch gekennzeichnet, dass** die Rotorwelle (3) aus magnetisierbarem Material besteht und in die Rotorwelle (3) ein Magnetfeldmodulationsmuster (9) eingebracht ist.

## Claims

1. Sensor device (8) on a printed circuit board (6), by means of which stator windings of an electric machine (1) are interconnected, wherein the sensor device (8) is arranged in a manner fixed to the housing in the electric machine (1), wherein the printed circuit board (6) is a carrier of the sensor device (8) such that the sensor device (8) does not require separate securing to a housing or to a stator (2) of the electric machine (1), having a magnetic field sensor integrated into the sensor device (8), by means of which magnetic field sensor both the earth's magnetic field and a magnetic field that rotates with the rotor shaft (3) of the electric machine (1) are able to be detected for rotor position identification, **characterized in that** the sensor device (8) has further sensors for detecting the longitudinal accelerations in all three spatial directions and the angular accelerations about all three spatial directions, wherein an evaluation unit is integrated into the sensor device (8), by means of which evaluation unit the sensor signals are evaluated, wherein the superposed magnetic fields from the sensor signal are analysed in the evaluation unit of the sensor device (8) such that the magnetic fields are able to be assigned individually in order to determine the present rotor position of the rotor shaft (3).

2. Sensor device (8) according to one of Claims 1, **characterized by** an embodiment as a MEMS (microelectromechanical system) sensor device.

3. Sensor device (8) according to either of Claims 1 and 2, **characterized in that** the sensor device (8) is arranged adjacent to the face side of the electric machine (1).

4. Electric machine (1) having a stator (2) having stator windings, having a rotor having a rotor shaft (3), having a housing, having a printed circuit board (6) for interconnecting stator windings and having a sensor device (8) according to one of Claims 1 to 3.

5. Electric machine (1) according to Claim 4, **characterized in that** a magnet is arranged as signal generator on the face side of the rotor shaft (3).

6. Electric machine (1) according to Claim 4, **characterized in that** the rotor shaft (3) is embodied without a magnet as signal generator for rotor position identification.

7. Electric machine (1) according to one of Claims 4 to 6, characterized in-that the rotor shaft (3) consists of magnetizable material and a magnetic field modulation pattern (9) is introduced into the rotor shaft (3).

## Revendications

1. Dispositif capteur (8) sur une carte de circuit imprimé (6), par l'intermédiaire duquel s'effectue l'interconnexion d'enroulements statoriques d'une machine électrique (1), dans lequel le dispositif capteur (8) est disposé de manière fixe sur le boîtier dans la machine électrique (1), dans lequel la carte de circuit imprimé (6) est un support pour le dispositif capteur (8), de sorte que le dispositif capteur (8) ne nécessite pas de fixation séparée sur un boîtier ou un stator (2) de la machine électrique (1),
comportant un capteur de champ magnétique intégré dans le dispositif capteur (8), par l'intermédiaire duquel tant le champ magnétique terrestre qu'un champ magnétique tournant avec l'arbre de rotor (3) de la machine électrique (1) peuvent être détectés en vue de la détection de la position du rotor,
**caractérisé en ce que** le dispositif capteur (8) comporte d'autres capteurs permettant la détection des accélérations longitudinales dans la totalité des trois directions spatiales ainsi que des accélérations angulaires autour de la totalité des trois directions spatiales, dans lequel une unité d'évaluation, par l'intermédiaire de laquelle les signaux de capteur sont évalués, est intégrée dans le dispositif capteur (8), dans lequel les champs magnétiques superposés sont analysés, à partir du signal de capteur, dans l'unité d'évaluation du dispositif capteur (8), de manière à ce que les champs magnétiques puissent être associés individuellement afin de déterminer la position de rotor actuelle de l'arbre de rotor (3).

2. Dispositif capteur (8) selon l'une des revendications 1, **caractérisé en ce qu'**il est réalisé sous la forme d'un dispositif capteur MEMS (Micro Electro Mechanical System).

3. Dispositif capteur (8) selon l'une des revendications 1 ou 2, **caractérisé en ce que** le dispositif capteur (8) est disposé au voisinage de la face frontale de la machine électrique (1).

4. Machine électrique (1) comportant un stator (2) muni d'enroulements statoriques, un rotor muni d'un arbre de rotor (3), un boîtier, une carte de circuit imprimé (6) permettant d'interconnecter les enroulements statoriques et un dispositif capteur (8) selon l'une des revendications 1 à 3.

5. Machine électrique (1) selon la revendication 4, **caractérisée en ce qu'**un aimant est disposé sur la face frontale de l'arbre de rotor (3) en tant que générateur de signaux.

6. Machine électrique (1) selon la revendication 4, **caractérisée en ce que** l'arbre de rotor (3) est réalisé sans aimant en tant que générateur de signaux pour la détection de la position du rotor.

7. Machine électrique (1) selon l'une des revendications 4 à 6, **caractérisée en ce que** l'arbre de rotor (3) est constitué d'un matériau magnétisable et **en ce qu'**un motif de modulation de champ magnétique (9) est appliqué dans l'arbre de rotor (3).
